# EUROPEAN PATENT APPLICATION

(11) **EP 3 430 895 A1**
(43) Date of publication of application: **23.01.2019**
(21) Application number: 18185066.0
(22) Date of filing: 23.07.2018
(51) Int. Cl.: A01K 27/00, A01K 13/00

(54) **DOG CLOTHING**

(30) Priority: 21.07.2017 GB 201711798
(71) Applicant: Treasure, Caroline, Staines-Upon-Thames, Middlesex TW18 3NB (GB)
(72) Inventor: Treasure, Caroline, Staines-Upon-Thames, Middlesex TW18 3NB (GB); Aldred, Sharon, Staines-Upon-Thames, Middlesex TW18 3NB (GB)
(74) Representative: Boult Wade Tennant LLP

(57) **Abstract**

The present invention relates to an item of dog (200, 209) clothing comprising (a) a body (101, 201) part arranged to cover the body (101, 201) of a dog (200, 209) and provided with one or more leg holes (102); and (b) one or more leg (110, 202) parts with one leg (110, 202) part for each leg hole (102). Each leg (110, 202) part comprises a fabric (122, 362) having opposed edges (124, 162) provided with co-operating fastening means such that the opposed edges (124, 162) may be brought together to allow the opposed edges (124, 162) to be fastened together using the fastening means thereby forming a tubular-shaped leg (110, 202) of the dog (200, 209) clothing. Each leg (110, 202) part is either (a) permanently joined to the body (101, 201) part so as to extend from the leg hole (102), or (b) configured to be joined to the body (101, 201) part via co-operating attachment means provided on the leg (110, 202) part and adjacent the leg hole (102) on the body (101, 201) part, such that when attached the leg (110, 202) part extends from the leg hole (102).

## Description

### Field of the invention

The present invention relates to dog clothing. More particularly, the present invention relates to dog clothing like a dog coat that covers a dog to prevent the dog from bringing dirt into a clean environment.

### Background to the invention

It is well known for dog owners to dress their dog either for practical or decorative purposes, for example to protect a dog from weather and to keep a dog clean when out on a walk. It is also known to provide a dog with clothing in order to prevent the dog from bringing dirt into a home or car. For example, it is common for a dog to become wet and muddy when taken for a walk and so it may be desirable to cover the dog's body before allowing the dog into a car so that the dog does not make the car wet and dirty.

While it is advantageous to cover the dog as completely as possible, allowing the dog freedom of movement is also important. Dog coats or jackets having legs joined to a body are known. While the dog's legs have free movement, these coats are difficult to put on the dog. A handler, such as the dog's owner, must put the dog's legs into the jacket's legs which requires manhandling the dog. To keep all four of the dog's legs in the coat's legs requires a great deal of co-operation from the dog that will often prefer not to be dressed in the coat. Even with a co-operative dog, it is difficult for a dog owner to get all four legs pushed through the legs of the coat without themselves getting covered in dirt from the dog.

It is noted that while dressing a dog is a particular problem for items such as the dog coats described above, the same difficulties will generally still arise whenever a dog's legs must be placed into the legs of any type of dog clothing. The present invention provides an improvement on such clothing.

### Summary of the invention

The present invention relates to dog clothing comprising a body part which is arranged to cover the body of a dog, either partially or wholly, and is provided with one or more leg holes. The dog clothing includes a number of leg parts corresponding to the number of leg holes. Each leg part comprises a fabric having opposed edges provided with co-operating fastening means. Fabric is used herein in a general sense, and is intended to cover any woven or non-woven fabric including all forms of textile and cloth, felts, webs of material such as meshes, and films. The fabric is not necessarily formed of fibres and as such sheets of latex, leather, suede and plastic are considered fabrics. The opposed edges of the fabric may be brought together to allow the opposed edges to be fastened together using the fastening means thereby forming a tubular-shaped leg of the dog clothing. The leg part is joined to the body part so as to extend from the leg hole, or is attachable to the body part via co-operating attachment means provided on the leg part and on the body part adjacent the leg hole such that, when attached, the leg part extends from the leg hole. The leg part provides material to form a fastening in that the opposed edges of the leg part are provided with co-operating fastening means.

When a dog is dressed with the dog clothing, the dog may be placed in the body part of the clothing with one of the dog's legs extending through each of the one or more leg holes. Then, the fabric may be wrapped around the leg of the dog to bring the opposed edges together and so enclose the leg. The fastening means provided on the opposed edges may be fastened together. The leg part now forms a tube that covers the leg of the dog like a leg of a pair of trousers.

In practice, the dog clothing is likely to comprise more than a single leg part. For example, the dog clothing may contain four leg parts, one for each leg of the dog. Alternatively, the dog clothing may comprise a pair of leg parts, for the fore legs or hind legs of the dog. The leg parts for the fore legs may be of a corresponding design, i.e. the leg parts may be identical or they may form mirror images. Similarly, the leg parts for the hind legs may be of a corresponding design, i.e. they may be identical or they may form mirror images. This is true for both dog clothing comprising four leg parts and two leg parts. For dog clothing comprising four leg parts, the leg parts for the hind legs may be different from the leg parts for the fore legs so as to provide better fit for the larger size of the hind legs. In the following, a description of one leg part may be taken as being applicable to all leg parts of the dog clothing. Features described below may be assumed to apply equally well to both leg parts for fore legs and hind legs, except where it is stated otherwise (for example to accommodate differences in the shapes and sizes of dog's fore legs and hind legs).

One advantage of having a leg part of the form described above is that it is much easier to dress the dog in the dog clothing. A handler need only place the dog's leg through the aperture formed by the leg hole which will have little depth. This is very much easier than having to manhandle the dog's leg through the full length of a leg of the clothing, as is necessary with the prior art.

Once the leg has been placed through the leg hole of the dog clothing, the handler may then simply wrap the fabric around the dog's leg and fasten the opposed edges together to secure the dog's leg within the clothing and hence retain the wet and dirt within the clothing.

Optionally, the leg part is permanently joined to the body part so as to extend from the leg hole. An advantage of having the leg part permanently attached to the body part is that it decreases the chances of the leg part becoming lost or mislaid. The leg part may be integrally formed with the body part or the leg part may be stitched to the leg part. The leg part may be joined to the body part all the way around the leg hole or only part way around the leg hole.

Alternatively, the leg part is detachable from the body part. The leg part may be attached to the body part via one part of the attachment means that is provided on a further edge of the fabric that extends from one of the opposed edges to the other of the opposed edges. The leg hole may comprise a band of material that defines the leg hole. The band of material may be provided with the other part of the attachment means that co-operate with the attachment means on the further edge of the leg part. This allows the leg part to be attached to the body part such that the leg part extends from the leg hole. The leg part may be attached to the body part all the way around the band of material or only part way around the band of material. Having a removable leg part means the leg parts can be replaced and provides greater flexibility in accommodating different dogs of different shapes and sizes (e.g. dogs such as Basset hounds and dachshunds have large bodies with short legs).

Not all leg parts need be the same. For example, some leg parts may be permanently joined to the body part and some leg parts may be detachable. For example, the fore leg parts may be permanently joined to the body part and the hind leg parts may be detachable, or vice versa.

Irrespective of whether the leg part is permanently joined to the body part or is detachable, the fabric may be split along a length of the leg part thereby forming the opposed sides. The split extends to the distal end of the leg part such that the cuff of the leg part is split. The leg part does not need to be split along its entire length. Instead the leg part could be joined to the body part around the entire circumference of the leg hole and the leg part could be split lower down towards the distal end of the leg part. Preferably, over half the length of the web material is split and, more preferably, more than three quarters the length of the web material is split. This reduces the depth of the top section of the leg part that encircles the leg hole which is preferable because the smaller this part, the easier it will be to place the dog's leg through the leg hole.

Alternatively, the fabric may be split along its entire length from the leg hole to the distal end. An advantage of splitting the fabric along its entire length is that it is easier to place the dog's leg into the leg part as it minimises the depth of the leg hole through which the dog's leg must be placed. It is possible to have a fabric that is split long its entire length and joined to the body part along only a portion of circumference of the leg hole. For example, the leg part may be joined to the body part for a half of the circumference of the leg hole. The join may be permanent or temporary, as described above.

As noted above, the body part may be provided with four leg holes and four leg parts for receiving all legs of a dog. Covering all four legs of the dog allows the dog clothing to cover completely the body (torso) and legs of the dog leaving only the head uncovered. To accommodate the dog's head, the body part may further comprise a neck hole in addition to the four leg holes.

In some embodiments, a hood extends from the neck hole to cover at least the top of the dog's head. In one example, the hood can be attached to the body part near the neck hole via fastening means. In another example, the hood can be integrally formed with the body part. When not in use, the hood can be folded away to lie against the body part of the dog coat.

The body part may have a continuous underside to cover the chest and belly of the dog and that contains the four leg holes. The body part may be split along the back to form opposed edges, for example along the entire length of the back. The edges may be provided with further fastener means. Such an arrangement makes it even easier to dress the dog. The body part may be spread open on the ground in its unfastened state. The dog may then be walked over the body part. The handler may then place each leg of the dog through a respective leg hole in turn. Once all four legs are in the clothing, the body part need merely be pulled up to meet the chest and belly of the dog, and then the opposed edges may be brought together to wrap the dog within the body part. The further fastener means can simply be fastened together and the dog is then securely dressed within the body part. All that then remains is for the leg parts to be fastened into place, as has already been described.

Any of the fastening means and/or attachment means mentioned above may comprise a hook and loop fastener, press studs, a zip or buttons and button holes. Hook and loop fasteners and press studs allow easier operation, in particular because they permit one-handed operation more easily than zips or buttons.

The leg part may be provided with a boot section comprising a pouch that is joined to the distal end of the leg part around the cuff of the leg part. The boot section may be a fold-away boot section. The fold-away boot section is joined to the distal end of the leg part around only a fraction of the cuff of the leg part. The join may be permanent or temporary, for example stitched to the leg part or integrally formed with the leg part to be permanently joined or temporarily joined using further attachment means. This fold-away boot section allows the boot section to be folded from a first position in which the pouch forms a boot for receiving a paw of the dog to a second position in which the pouch is folded inside out to fold back away against the distal end of the leg part. An advantage of this fold-away design is that the boot remains attached to the leg part which decreases the chance of the boot becoming lost. At the same time, the boot can be folded back out of the way when the dog is being dressed. Once the leg part has been wrapped around the dog's leg and fastened in place, the boot section may be folded back into place to enclose the dog's paw, thereby covering the paw and retaining the wet and dirt within the clothing. The pouch and the leg part may comprise complementary fastening means for securing the pouch in the second position when the pouch is not in use. This allows a handler to place the dog clothing on the dog without being impeded by the pouch. It also prevents the pouch obstructing the movement of the paw of the dog when the dog clothing is used without using the pouch to cover the paw of the dog.

In some instances, the dog clothing may further comprise a harness. The harness may be configured to wrap around the chest and neck of the dog. The harness may be integrated with the body part, for example the harness may be stitched to the body part. An integrated harness provides added convenience for the handler since it means a separate harness is no longer required. The handler may simply attach a lead to the harness to help control the dog, or may attach a seat belt of a car to the harness to secure the dog during transport. For example, the harness may be provided with an attachment point such as a ring or hook for connection with the lead.

Optionally, the dog clothing comprises a breathable material to provide additional comfort to the dog. The dog clothing may comprise waterproof material.

### Brief description of the drawings

In order that the invention can be more readily understood, reference will now be made, by way of example only, to the accompanying drawings in which:
Figure 1 shows a side view of a dog wearing a dog coat in accordance with an embodiment of the present invention;
Figure 2 shows a leg of the dog coat of Figure 1 in an open configuration;
Figure 3 shows an alternative design of a top of a leg of the dog coat according to a further embodiment of the present invention;
Figure 4 corresponds to the side view of Figure 1 with one leg shown in an unfastened state;
Figure 5 is a rear view of the dog wearing the dog coat of Figure 1;
Figures 6(a) to (e) show the bottom of one of the legs of Figure 1 in greater detail;
Figure 7 shows a side view of dog wearing dog coat in accordance with a further embodiment of the present invention that comprises a harness;
Figure 8 is a rear view of the dog wearing the dog coat of Figure 7;
Figure 9 shows a top view of the dog coat in accordance with an alternative embodiment of the invention;
Figure 10 shows a side view of a dog wearing a dog coat in accordance with the embodiment shown in Figure 9;
Figures 11(a) to (c) show a boot that can be attached to a dog coat in accordance with another embodiment of the invention;
Figure 12 shows a side view of dog wearing a dog coat in accordance with a further embodiment of the present invention that comprises a harness; and
Figure 13 is a rear view of the dog wearing the dog coat of Figure 12.

### Detailed description of embodiments

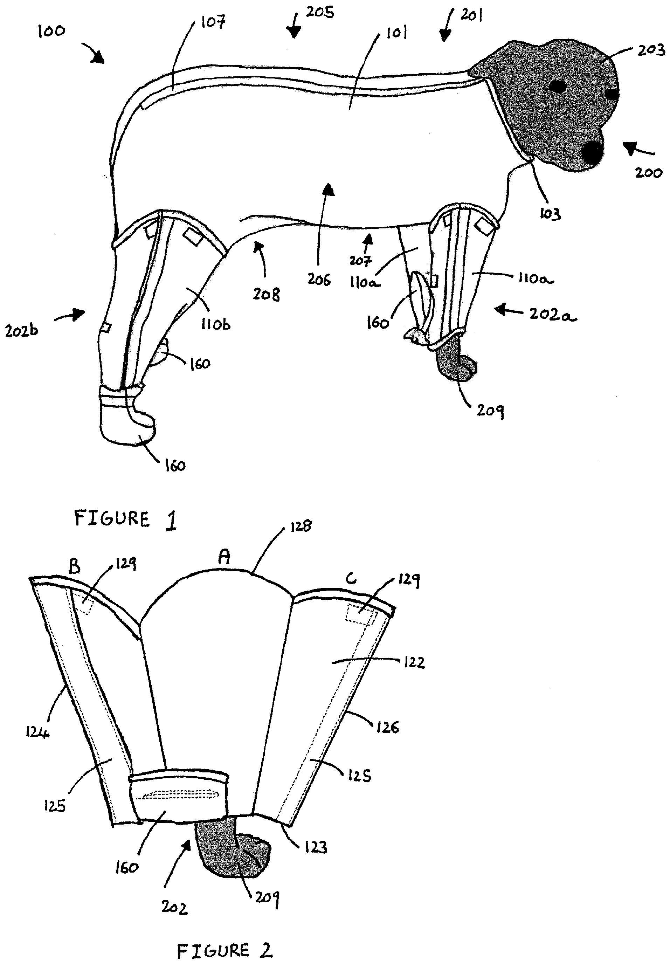

Figure 1 shows a side view of a dog 200 wearing an item of dog clothing in accordance with an embodiment of the present invention, namely a dog coat 100. The dog coat 100 completely covers the dog's body 201, tail and legs 202 leaving only the head 203 and neck 204 uncovered. In order to achieve this, the dog coat 100 comprises a body 101 and four legs 110. Two legs 110a accommodate the dog's fore legs 202a and two legs 110b accommodate the dog's hind legs 202b. The coat's hind legs 110b are wider than the fore legs 110a to provide a better fit. Each coat leg 110 is provided with a fold-away boot 160.

As shown in Figure 1, the coat body 101 completely covers the back 205, sides 206, chest 207 and belly 208 of the dog 200 thereby enveloping the dog's body 201. The coat body 101 comprises a neck hole 103 through which the head 203 and neck 204 of the dog 200 extends. The body 101 can also comprise a tail hole to allow the tail to extend out of the dog coat 100. However, in the embodiment of Figure 1, the tail of the dog 200 is contained within the coat body 101 to rest against the dog's body 201.

The coat body 101 is provided with a fastening means, namely a length of hook and loop fastener 107 where it extends over the dog's back 205. This allows the body 101 to be pulled apart along a split in the body 101 to allow the dog 200 to be dressed and undressed more easily. The fastener 107 need not be a hook and loop fastener (such as e.g. Velcro®), as other types of fastener such as popper studs or a zip may be used.

Figure 2 shows one of the legs 110 of the coat 100 in greater detail. The leg 110 is shown in an open configuration. The leg 110 comprises a fabric 122 divided into three panels, labelled as A, B and C. Panel A forms roughly half the width of the fabric 122 while panels B and C are positioned to either side of panel A and are equally sized to form about a quarter of the width of the fabric 122 each.

The leg 110 comprises a top edge 128, a bottom edge 123 and two side edges 124, 126. One side edge 124 is provided by panel B and the other side edge 126 is provided by panel C. Each side edge 124, 126 is provided with fastening means, namely one half of a hook and loop fastener 125, as shown in the figures. In Figure 2, the leg 110 is shown in an open position prior to being wrapped around the dog's leg 202. Once wrapped around the dog's leg 202, the two parts of the hook and loop fastener 125 may be joined.

The bottom edge 123 also extends across all three panels A, B and C. The bottom edge 123 forms a cuff to the leg 110, and is provided with a binding of hard wearing material to prevent fraying.

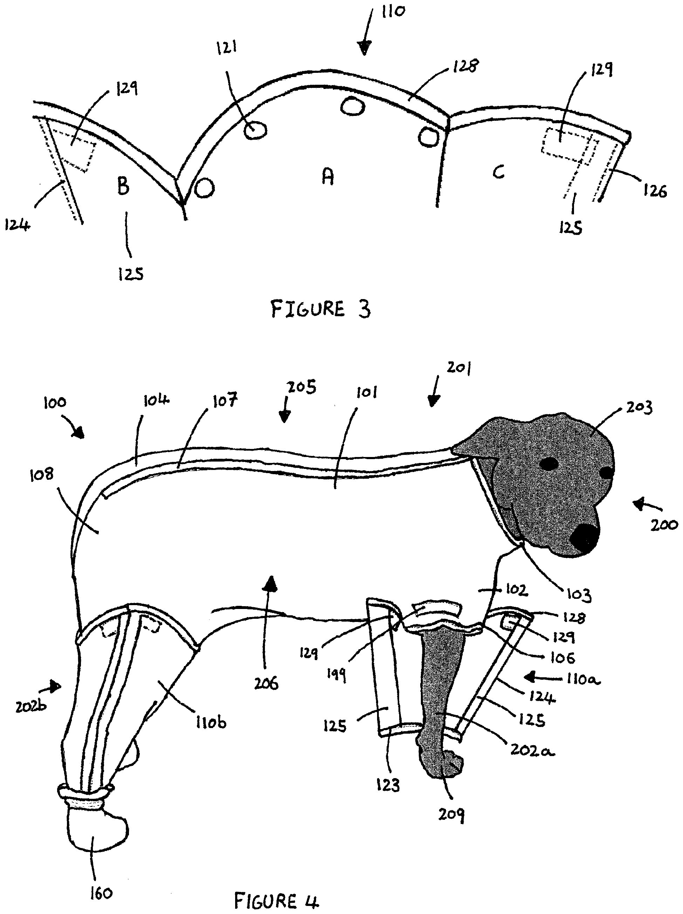

The top edge 128 of the leg 110 extends across all three panels A, B and C and is used to join the coat leg 110 to the body 101. In the embodiment of Figure 2, leg 110 is permanently joined to the body 101 as the top edge 128 of panel A is stitched to the body 101 adjacent a leg hole 102, as will be most apparent from Figure 4. The top edge 128 of panels B and C are protected with a binding of hard wearing material to protect from fraying.

In other embodiments, an alternative permanent connection between each leg 110 and the body 101 may be made by integrally forming each leg 110 with the body 101 such that the top edge 128 of panel A extends continuously into the body 101 of the coat 100.

In yet other embodiments, each leg 110 is not joined permanently to the body 101. One such embodiment is shown in Figure 3 where the top edge 128 of panel A is provided with popper studs 121. The body 101 is provided with complementary popper stud parts around the leg hole 102 to allow the leg 110 to be joined to the body 101. Other temporary fastening means such as hook and loop fasteners may be used. As can be seen, the embodiment of Figure 3 has a top edge 128 that is protected with a binding of hard wearing material on all three panels A, B and C.

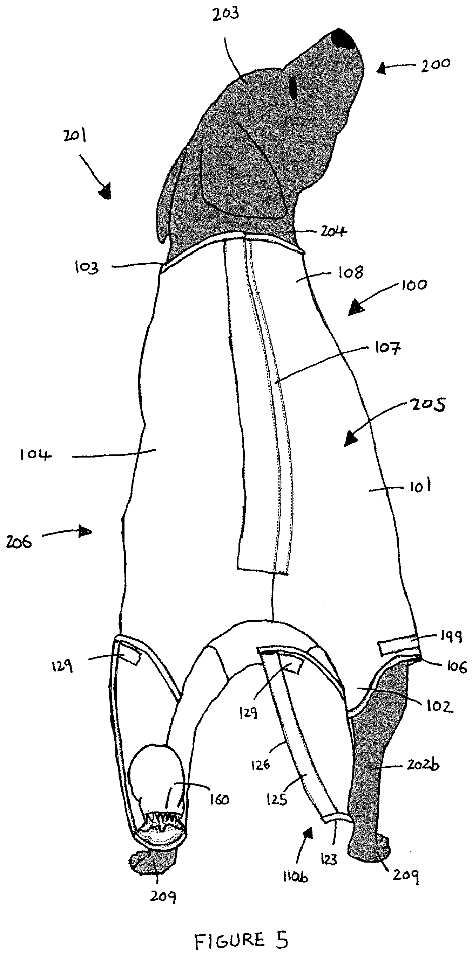

The join between the leg 110 and the leg hole 102, whether permanent or temporary, may be supplemented by small sections of hook and loop fasteners 129 provided on panels B and C adjacent the top edge 128. These sections of fastener 129 join to a complementary section of hook and loop fastener 199 provided on the body 101 adjacent the leg hole 102, as best seen in Figures 4 and 5.

As can also be seen in Figures 4 and 5, each leg hole 102 is formed from a band of material that provides a cuff 106 that ends with a binding of hard wearing material to protect from fraying. The cuff 106 fits loosely around the dog's leg 202. The cuff 106 provides the necessary surface to allow the legs 110 to be attached to the body 101, but is kept shallow to make it easier to place the dog's legs 202 through the leg holes 102.

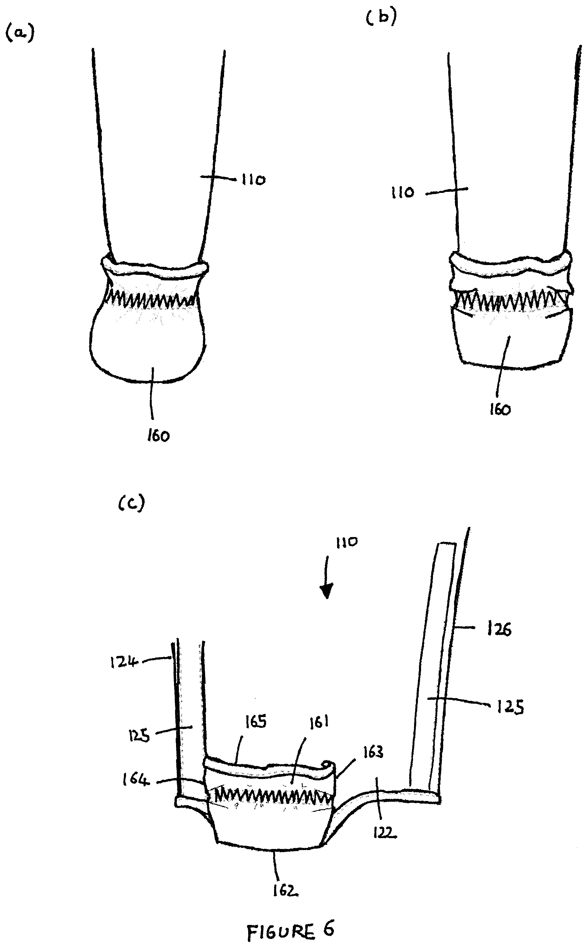

Figures 6(a) to (c) show the lower part of a leg 110 of the dog coat 100. It is to be understood that the leg 110 shown is exemplary and represents any of the four leg parts 110.

As shown in Figure 6(a), the boot 160 is used to cover the dog's paw 209. In use, the boot 160 extends from the distal end of the leg 110 so that the leg 110 and boot 160 combine to cover the dog's leg 202 and paw 209 completely. As shown in Figures 6(b) and (c), the boot 160 can be folded away when not in use to rest against the back of the leg 110. This allows easy storage of the boot 160 while ensuring the boot 160 does not interfere with easy fitting of the leg 110. Figure 6(b) shows the leg 110 in a closed position while Figure 6(c) shows the leg 110 in an open position.

As can be seen most clearly from Figure 6(c), in one embodiment, the boot 160 comprises a patch of material 161 with four edges. Three of these edges 162, 163, 164 are attached to the leg 110, for example by stitching or are integrally formed with the leg 110, while the fourth edge 165 is not. This unattached edge 165 is the upper edge, as can be seen in Figures 6(a) to (c), and this allows the boot 160 to be flipped over to cover the dog and uncover the dog's paw 209 as shown in the figures.

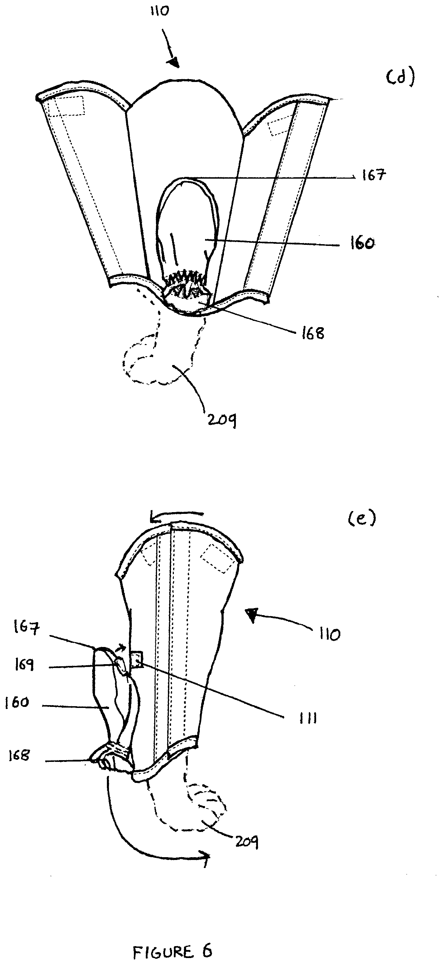

In another embodiment, as shown in Figures 6(d) and 6(e), the boot 160 comprises a sealed end 167 and an open end 168. The boot 160 is attached to the leg 110 along an edge proximate the open end 168 of the boot 160. A temporary fastening means 169 is attached to the boot 160 proximate the sealed end 167. A complementary fastening means 111 is attached to the leg 110. This secures the boot 160 away from the dog's paw 209 when the boot 160 is not in use.

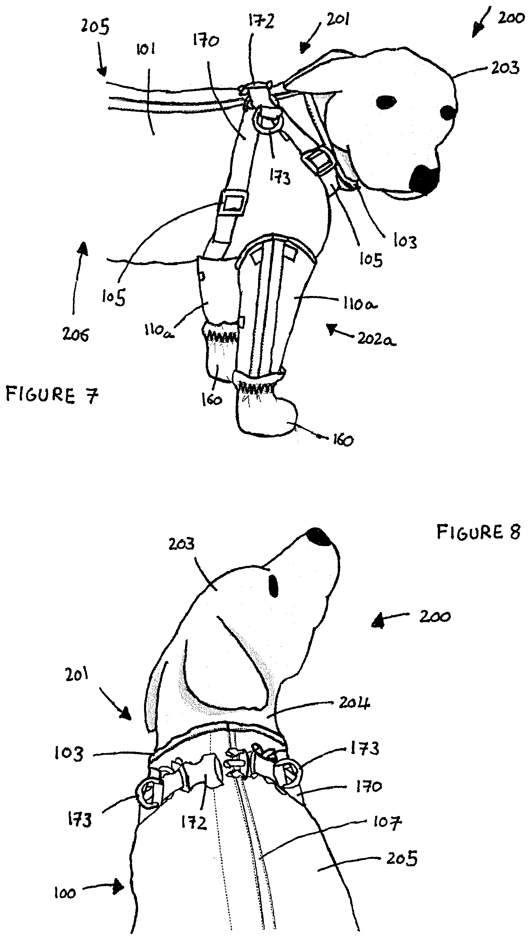

Figure 7 shows a further embodiment of dog clothing according to the present invention, namely a dog coat 100 incorporating a harness 170. The harness 170 wraps around the dog's chest 207 and neck 204 in conventional fashion. The harness 170 is stitched to the coat body 101, although may be joined in other ways. The harness 170 features adjusters 105 on either side 104, 108 of the coat body 101 to allow the size of the harness 170 to be adjusted to fit the size of the dog 200 better.

The top of the harness 170 is split into two parts via buckle 172 that is located over the split in the coat body 101. This allows the harness 170 to be split when the coat body 101 is opened for fitting the coat 100 to the dog 200. The buckle 172 comprises two halves that provide a secure snap fit. Each half of the buckle 172 is attached to the harness 170 via a loop of harness material that passes through each half. The buckle 172 and the short sections of harness material forming the loops are not stitched to the coat body 101 to allow easier operation of the buckle 172 and to allow the size of the harness 170 to be adjusted to allow for different sizes of dog. Metal rings 173 sit either side of the buckle 172. The rings 173 may be secured in loops of material of the harness 172.

The dog coat 100 may be made from breathable waterproof material to allow greater comfort for the dog. However, non-waterproof and/or non-breathable materials may be used.

The dog coat 100 may also comprise a hood (not shown) that extends from the neck hole 103 of the coat 100. The hood may be integrally formed with the body 101 of the dog coat 100. Alternatively, the hood and the body 101 of the dog coat 100 may be provided with complementary fastening means such that the hood can be removably attached to the coat 100. The hood can be folded away when not in use to rest against the body 101 of the coat 100.

To dress the dog 200, the coat 100 may be prepared as follows. If necessary, the handler will first attach the legs 110 to the body 101 using the fasteners like the popper studs 121. The body 101 of the coat 100 is opened by unclipping the buckle 172 and unfastening the hook and loop fastener 107 that runs along the back of the coat 101. Then the coat 101 may be placed on the ground and spread out. The dog 200 may then be brought to the coat 101 to face in the same direction as the coat 101. The handler then may simply place each of the dog's legs 202 through the leg holes 102 of the coat body 101 in turn. The coat body 101 may then be raised and brought into contact with the chest 207 and belly 208 of the dog 200.

The coat 100 may be supplied in a storage bag (not shown) which can be opened to lie flat on the ground. Before dressing the dog 200, the handler may open up the storage bag so that it forms a mat for the dog 200 to stand on. The coat 100 can then be prepared as above and placed on the mat formed by the storage bag, thereby helping to keep the coat 100 clean. The handler can then place the dog 200 into the coat 100 as defined above. Use of the mat will be beneficial when the ground is wet or dirty. Alternatively, the dog 200 may be dressed without resting the coat 100 on the ground. The coat 100 may be held clear of the ground by the handler in one hand, while the handler's other hand may place each paw 209 of the dog 200 through each leg hole 102 in turn, before pulling the dog coat 100 upwards as before.

With the coat's body 101 pulled up to the dog's chest 207 and belly 208, the sides 104, 108 of the body 101 are brought together to meet over the back 205 of the dog 200 such that the coat may be fastened using the hook and loop fastener 107. The handler may then close the buckle 172. If necessary, the handler may adjust the harness 170 using the adjusters 105 provided on the sides 104, 108 of the coat body 101 to ensure a comfortable fit of the harness 170 on the dog 200.

Thus, the coat body 101 is now securely fitted to the dog 200 such that the handler may attend to wrapping the dog's legs 202 with the legs 110 of the coat 100. If the legs 110 are not already in their open configuration with the boots 160 folded back out of the way, the handler may attend to this first.

With each leg 110 in the correct configuration for easy dressing of the dog 200, the handler may then wrap the fabric 122 forming a leg 110 around one of the dog's legs 202, and secure the leg 110 in place using the hook and loop fastener 125. The leg 110 is also fastened to the leg hole 102 by the handler using the hook and loop fastener sections 129 and 199 provided on panels B and C.

The leg 110 is now securely fastened such that the handler may put the boot 160 in place, if desired. The boots 160 may not always be used, for example where the dog 200 must walk on dirty or slippery ground. To use the boot 100, the handler folds the boot 160 back over such that the boot 160 unfolds around the dog's paw 209. Thus deployed, the boot 160 and leg 110 continuously cover the dog's leg 202 and paw 209.

Once all the dog's legs 202 are dressed and the boots 160 are in place, if used, the handler may attach a dog lead to the metal rings 173 located to either side of the clip 172. The dog 200 may be walked or helped into a car. Once in a car, the metal rings 173 may be used to secure the dog 200 in the car, either directly or via an intermediary fitting that may be provided with a male part of a standard car seatbelt buckle.

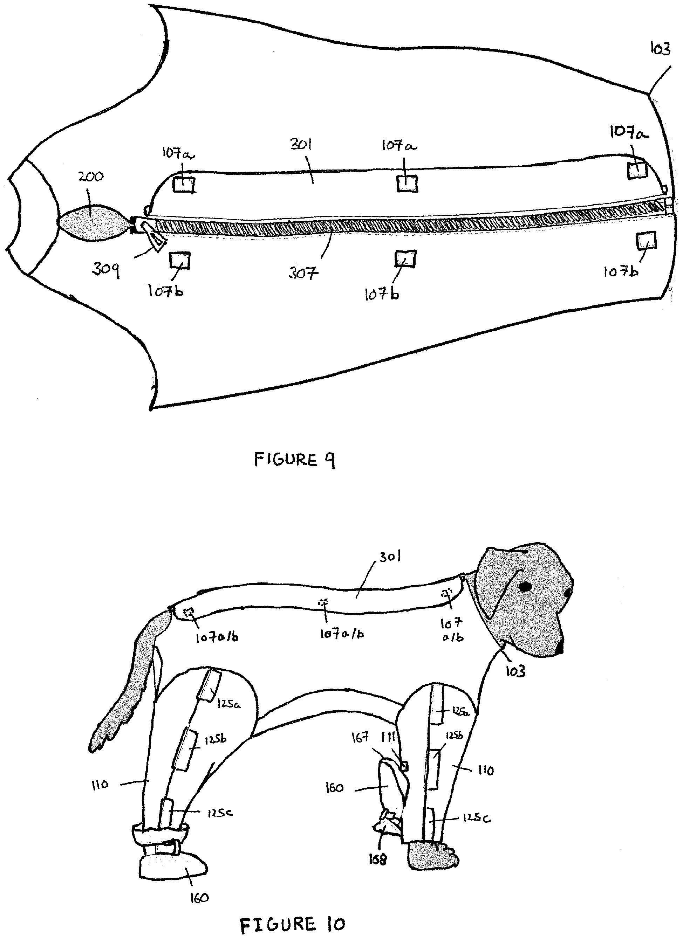

Figures 9 and 10 show an alternative embodiment in which the fastener 107 is a zip 307 which extends over the dog's back 205. The two sides of the zip 307 sit on either side of the split in the body 101 of the dog coat 100. As such, the zip 307 is the primary mechanism for allowing the body 101 to be pulled apart to allow the dog 200 to be dressed and undressed more easily.

As can be seen in Figures 9 and 10, in this embodiment a flap 301 is provided to cover the zip 307 and protect the zip 307 from dirt and the like. A first half of hook and loop fastener 107a is provided on the flap 301 on the back of the dog coat 100. Once zip 307 has been fastened, the flap 301 can be folded over to cover the zip 307 such that the first half of hook and loop fastener 107a is brought into contact with a corresponding second half of hook and loop fastener 107b provided on the back of the dog coat 100 thereby securing the flap 301 in place. Preferably, the hook and loop fastener 107a/b is not one continuous length of fastener and is instead formed of multiple small patches of hook and loop fastener.

Figure 9 shows just the back of the dog coat 100. The neck hole 103 is toward the right of Figure 9. As such when the dog 200 is wearing the coat shown in Figure 9, the dog's head 203 would be to the right of the Figure and the dog's tail to the left of the Figure. As shown in Figure 9, zip 307 is zipped towards the tail of the dog 200. As such, when the zip is closed the slider 309 of the zip 307 sits next to the tail of the dog 200 and when the zip is open the slider 309 sits next to the head 203 of the dog 200. In this version the tail of the dog 200 is either placed in one of the leg parts 110 or a tail hole is included to allow the tail to sit outside of the dog coat 100. The use of the zip 307 ensures that the dog coat 100 can be securely and easily fastened and improves the ease of fitting the dog coat 100 to the dog 200.

As also shown in Figure 10, in one embodiment the hook and loop faster 125 provided on edges 124 and 126 of leg part 110, is provided in the form of three patches of hook and loop fastener 125a, 125b and 125c. This increases the ease of fitting the leg part 110 of the dog coat 100.

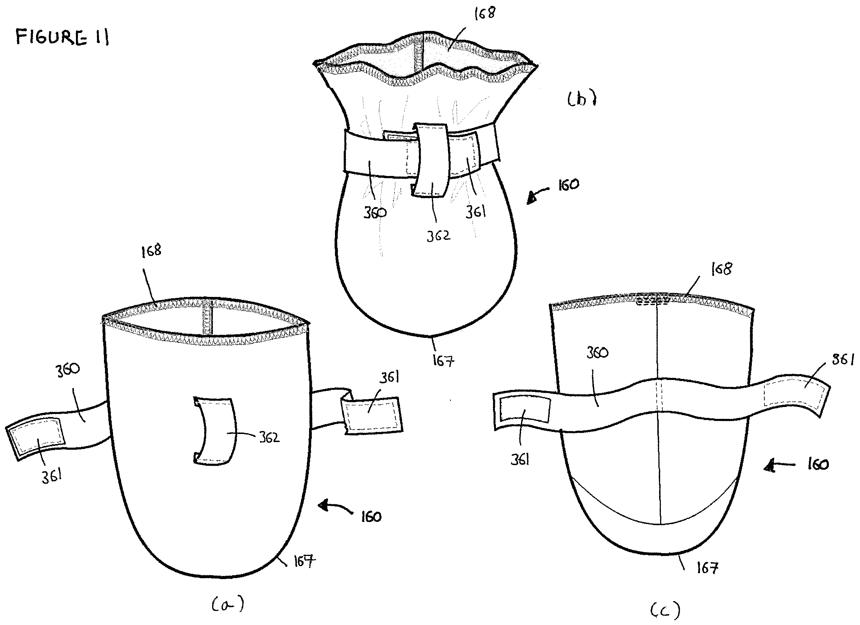

Figure 11 shows an alternative embodiment for the boot 160 wherein boot 160 comprises a sealed end 167 and an open end 168. As shown in Figure 10, the boot 160 is permanently attached to the leg 110 along an edge proximate the open end 168 of the boot 160 preferably by spot tacking. A temporary fastening means (not shown) in the form of hook and loop fastener is attached to the boot 160 proximate the sealed end 167. A complementary fastening means 111 in the form of hook and loop fastener is attached to the leg 110. This allows the boot 160 to be fastened to the leg part 110 and out of the way of the dog's paw when the boot 160 is not in use.

Referring back to Figure 11, the boot 160 comprises strap 360 which is attached to the boot 160 at the back of the boot. The strap 360 is of a length suitable to allow it to be wound around the boot 360 parallel to the sealed end 167 and the open end 168. When a paw of the dog 209 is placed in the boot 160, the strap 360 is wrapped around the boot 160 and hence the leg of the dog 209 to hold the boot 160 in place. The strap 360 can be secured by a fastening means, for example hook and loop fastener 361 which is provided on either end of the strap 360. The strap 360 can be passed through a loop of fabric 362 attached to boot 160. Loop of fabric 362 is a loop perpendicular to the sealed end 167 and the open end 168 of the boot 160. Loop of fabric 362 can be used to help correctly position the strap 360 before it is fastened. The use of a strap 360 allows the boot 160 to be held securely in place while still ensuring the boot 160 is easy to fit onto the dog 200.

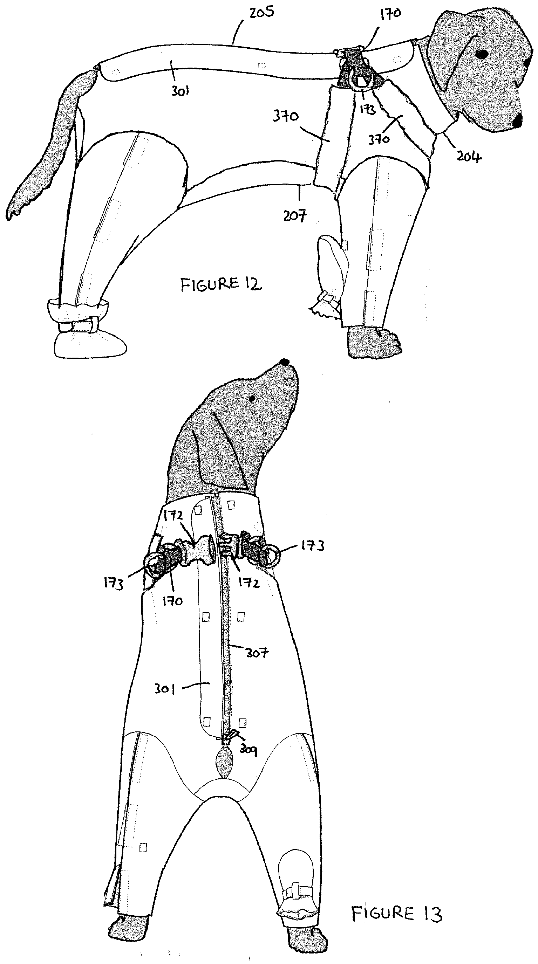

Figures 12 and 13 show an alternative embodiment for harness 170. In this embodiment the harness is contained within a channel 370 of the dog coat 200. The channel 370 has openings at the dog's back 205 to allow access to the buckle 172 and the metal rings 173. The channel 370 preferably runs around the dog's chest 207 and neck 204 in the same manner as a standard dog harness. The harness 170 can be stitched or otherwise secured in the channel 370. Alternatively, the harness 170 can be integrated into the dog coat 200 by being placed in the channel 370 without further securing. The use of a channel 370 allows the harness 170 to be integrated into the dog coat 200 easily, and prevents the harness 170 from getting caught or snagged on the dog coat 200. The channel 370 can be a continuous channel. However, in alternative embodiments, the channel 370 can be a discontinuous channel which could take the form, for example, of multiple belt loops.

Although a specific embodiment has been described, it will be appreciated that this is for the purposes of illustration only and is not intended to be limiting. Various alternative embodiments will be appreciated by the person skilled in the art.

For example, any of the fasteners described above could take multiple forms including hook and loop fasteners, zips, buttons and press studs, or combinations thereof.

Furthermore, although the present invention has been described in terms of legs 110 that cover substantially the entire dog's legs 202, coat legs 110 covering only a portion, such as half, of the dog's leg 202 can also be envisaged.

Similarly, although panel A has been described as forming half the width of the fabric 122, it is understood that panel A could be narrower or wider and the widths of panels B and C could also be adjusted as necessary.

Moreover, boots 160 attached to the coat legs 110 are described above, although separate boots 160 can also be envisaged. For example, boots may be provided that are retained on the dog's paws 209 such as by using elasticated cuffs.

Although the present invention has been described as a dog coat 100 that completely covers the body of the dog 200, legs 100 like those described above could also be used with other items of dog clothing. For example an item of dog clothing could comprise a body that covers only the upper half of the dog's body 201 and comprise only two legs such as the dog's fore legs 202a. Similarly, a set of dog trousers that cover only the lower part of the dog's body 201 and the dog's hind legs 202b can also be envisaged. The skilled person would understand that the connection between the coat legs 110 and body 101, and the wrap-around coat legs 110 discussed above could be used in all such types of dog clothing.

## Claims

1. Dog clothing comprising:
a body part arranged to cover the body of a dog and provided with one or more leg holes;
one or more leg parts with one leg part for each leg hole, wherein each leg part comprises a fabric having opposed edges provided with co-operating fastening means such that the opposed edges may be brought together to allow the opposed edges to be fastened together using the fastening means thereby forming a tubular-shaped leg of the dog clothing; and either:
(a) each leg part is permanently joined to the body part so as to extend from the leg hole, or
(b) each leg part is configured to be joined to the body part via co-operating attachment means provided on the leg part and adjacent the leg hole on the body part, such that when attached the leg part extends from the leg hole.

2. Dog clothing according to claim 1, wherein the at least one leg part is permanently joined to the body part such that the leg part is joined to the body part so as to extend from the leg hole, and wherein the fabric is split along a length of the leg part thereby forming the opposed sides with the split extending to the distal end of the leg part such that a cuff of the leg part is split.

3. Dog clothing according to claim 1, wherein the at least one leg part is configured to be joined to the body part and wherein one part of the co-operating attachment means is provided on a further edge of the fabric that extends from one of the opposed edges to the other of the opposed edges.

4. Dog clothing according to claim 3, wherein each leg hole of the body part comprises a band of material that defines the leg hole, and the band of material is provided with the other part of the co-operating attachment means to allow the leg part to be attached to the body part such that the leg part extends from the leg hole.

5. Dog clothing according to any preceding claim, wherein the fabric of at least one leg part is split along its entire length from the leg hole to the distal end.

6. Dog clothing according to any previous claim, wherein the fastening means and/or the attachment means comprise: a hook and loop fastener, a zip, buttons and button holes, or press studs.

7. Dog clothing according to any previous claim, wherein:
the body part is provided with a pair of leg holes for receiving the fore legs of a dog, and the dog clothing comprises two leg parts.

8. Dog clothing according to any of claims 1 to 6, wherein the body part is provided with four leg holes for receiving the legs of a dog, and the dog clothing comprises four leg parts.

9. Dog clothing according to claim 8, wherein the body part has a continuous underside for covering the dog's chest and belly and that is provided with the four leg holes, and wherein the body part is split along the length of a back portion to form opposed edges, wherein the edges are provided with further fastener means, optionally a hook and loop fastener or a zip, and optionally, wherein the body part further comprises a neck hole in addition to the four leg holes, but otherwise encloses the body of a dog when worn.

10. Dog clothing according to any of claims 8 to 9, wherein the four leg parts are arranged to wrap around the legs of the dog when worn leaving only a hole at either end thereby enclosing each leg of the dog.

11. Dog clothing according to any previous claim, wherein the leg part further comprises a boot part comprising a pouch that is joined or configured to be joined to the distal end of the leg part around the cuff of the leg part.

12. Dog clothing according to claim 11, wherein the boot part is a fold-away boot part comprising a pouch that is or is configured to be joined to the distal end of the leg part around only a fraction of the cuff of the leg part thereby allowing the boot to be folded from a first position in which the pouch forms a boot for receiving the paw of a dog to a second position in which the pouch is folded inside out to fold away against the distal end of the leg part.

13. Dog clothing according to claim 12, wherein the pouch and the leg part comprise complementary fastening means for securing the pouch in the second position when the pouch is not in use.

14. Dog clothing according to any previous claim, further comprising an integrated harness joined to or retained by the body part, and optionally, wherein the harness is stitched to the body part for wrapping around the chest and neck of the dog.

15. Dog clothing according to claim 14, wherein the harness is provided with an attachment point for allowing a lead to be attached to the harness.
